# EUROPÄISCHE PATENTANMELDUNG

(11) **EP 2 725 235 A1**
(43) Veröffentlichungstag der Anmeldung: **30.04.2014**
(21) Anmeldenummer: 12189743.3
(22) Anmeldetag: 24.10.2012
(51) Int. Cl.: F04D 29/68

(54) **Unterschiedlich raue Schaufel und zugehörige Herstellungsverfahren**

(71) Anmelder: Siemens Aktiengesellschaft, 80333 München (DE)
(72) Erfinder: Ahmad, Fathi, 41564 Kaarst (DE)

(57) **Zusammenfassung**

Durch die unterschiedliche Ausgestaltung der Rauheit der Oberflächen auf der Saug (7)- und der Druckseite (4) einer Schaufel (1, 120, 130) kann die Leistung der Schaufel eines Kompressors oder einer Turbine verbessert werden.

## Beschreibung

Die Erfindung betrifft eine Schaufel, die auf ihren Oberflächen unterschiedlich rau ausgebildet ist und Verfahren zur Herstellung.

Schaufeln werden in Kompressoren oder in Dampf- oder Gasturbinen verwendet.
Dabei strömt ein Medium wie Luft oder Heißgas an der Turbinenschaufel vorbei, so dass es eine Interaktion zwischen diesem Medium und der Oberfläche der Schaufel gibt.
Diese Interaktion ist wichtig für die Funktion der Schaufel.

Es ist daher Aufgabe der Erfindung, eine Schaufel insbesondere für Kompressoren oder Turbinen, wie Dampfturbinen oder Gasturbinen aufzuzeigen, die eine verbesserte Leistung aufweist.

Die Aufgabe wird gelöst durch eine Schaufel gemäß Anspruch 1 und Verfahren zur Herstellung nach Anspruch 8, 9.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2: Querschnitte durch eine Schaufel,
- Figur 3: eine Turbinenschaufel.

Die Figur und die Beschreibung stellen nur ein Ausführungsbeispiel der Erfindung dar.

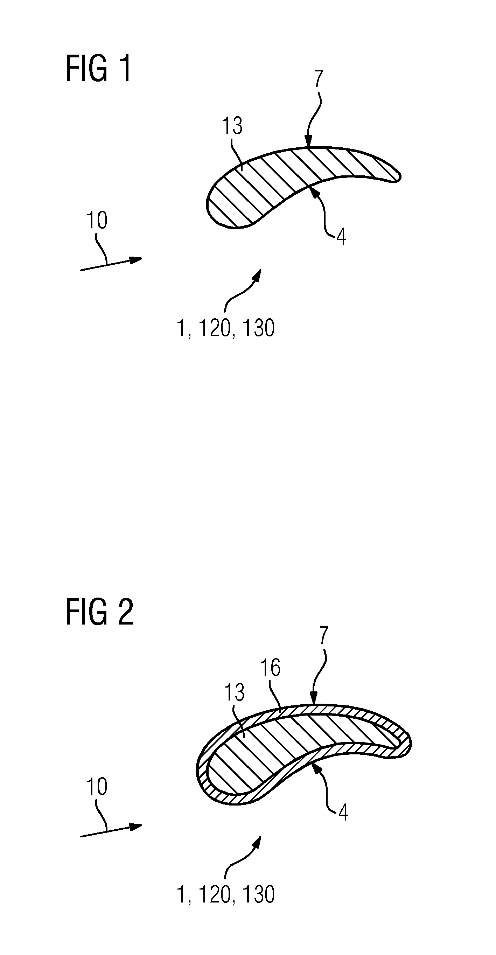

Figur 1 zeigt eine Schaufel 1, 120, 130, insbesondere eine Turbinenschaufel im Querschnitt mit der Saugseite 7 und der Druckseite 4, wobei die Schaufel 1, 120, 130 in der Strömungsrichtung 10 von einem Medium umströmt wird.

Erfindungsgemäß wird die Saugseite 7 glatter oder weniger rau ausgeführt als die Druckseite 4.

Insbesondere ist die Druckseite 4 mindestens zweimal, vorzugsweise dreimal, rauer ausgeführt als die Saugseite 7.

Dabei spielt es keine Rolle, ob die Oberfläche der Schaufel 1 nicht beschichtet ist (Fig. 1) oder ob eine äußerste Beschichtung eine metallische und/oder keramische Beschichtung, ggf. mit metallischen Unterschichten, darstellt (Fig. 2).

Die Rauhigkeiten werden dann entsprechend auf der Substratoberfläche oder der metallischen bzw. keramischen Oberfläche eingestellt oder erzeugt.

Beim Substrat 13 ohne Beschichtung kann das durch eine nachträgliche Bearbeitung d.h. durch Aufrauung der Druckseite 4 oder eine Glättung der Saugseite 7 erfolgen.

Wenn es ein Gussteil ist, kann auch die Gussform, in die das Metall zur Erzeugung des Substrats 13 eingegossen wird, mit ihrer inneren Oberfläche entsprechend verschieden rau ausgestaltet werden, um die Rauhigkeiten zu erzeugen.

Ebenso ist eine nachträgliche Bearbeitung möglich d.h. eine Glättung oder Aufrauung des Substrats 13 findet statt.

Bei Beschichtungen auf Substraten 13 ist es ebenfalls möglich, den Rauheitsgrad einzustellen, so dass durch die Beschichtung schon die unterschiedliche Rauheit eingestellt wird. Dies ist vorzugsweise durch verschieden große Pulverkörner möglich, die zur Beschichtung verwendet werden.

Ebenso ist eine nachträgliche Bearbeitung möglich d.h. eine Glättung oder Aufrauung der Schicht 16 findet statt.

Für die Ermittlung der Rauheit können verschiedene Rauheitsdefinitionen verwendet werden.
Vorteilhafter Weise ergibt sich bzw. wird eine Rauheit von ≤ 6µm für die Saugseite 7 und/oder eine Rauheit von mindestens 20µm, insbesondere von 20µm bis 30µm für die Druckseite 4 eingestellt.

Durch diese erfindungsgemäße Ausgestaltung der Schaufel wird der Druck innerhalb eines Kompressors oder einer Turbine erhöht, was zu einer Leistungssteigerung führt.

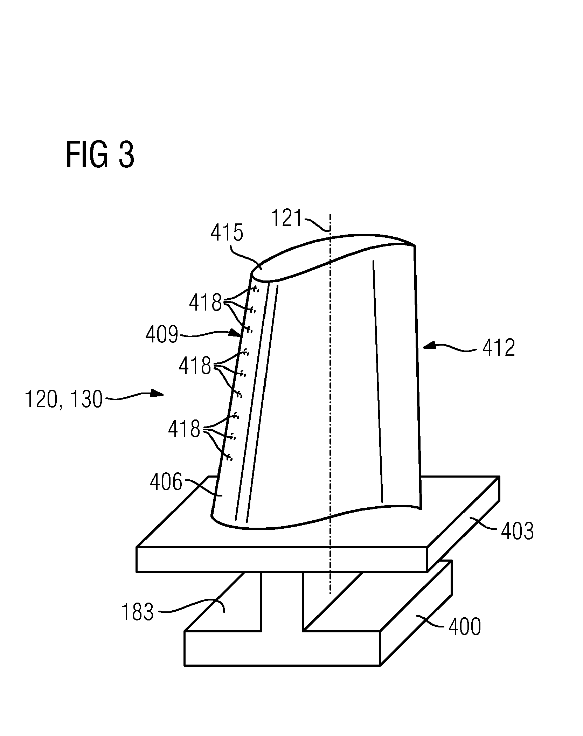

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10A1-0,4Y-1,5Re.

Auf der MCrA1X kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrA1X-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Gekrümmte Schaufel (1, 120,130),
insbesondere für einen Kompressor oder eine Turbine,
die eine Saugseite (7) und eine Druckseite (4) aufweist, **dadurch gekennzeichnet, dass**
die Oberfläche der Saugseite (7) zumindest größtenteils, insbesondere vollständig,
weniger rau ausgebildet ist als die Oberfläche der Druckseite (4),
insbesondere mindestens 20% weniger rau ist.

2. Schaufel nach Anspruch 1,
bei der die Schaufel (1, 120, 130) nur aus einem unbeschichteten Substrat (13) besteht und
die unterschiedlichen Rauhigkeiten auf der Substratoberfläche ausgebildet sind.

3. Schaufel nach Anspruch 1,
bei der eine metallische Beschichtung (16) auf der Schaufel (1, 120, 130) aufgebracht ist,
die als äußerste Schicht (16) die unterschiedlichen Rauhigkeiten aufweist.

4. Schaufel nach Anspruch 1,
bei der eine keramische Beschichtung (16) auf der Schaufel (1, 120, 130) aufgebracht ist,
die als äußerste Schicht (16) die unterschiedlichen Rauhigkeiten aufweist.

5. Schaufel nach einem oder mehreren der Ansprüche 1 bis 4,
bei der die Rauheit der Druckseite (4) mindestens zweimal, insbesondere mindestens dreimal größer ist als die Rauheit der Saugseite (7).

6. Schaufel nach einem oder mehreren der Ansprüche 1 bis 5,
bei der die Saugseite (7) eine Rauheit ≤ 6µm aufweist.

7. Schaufel nach einem oder mehreren der Ansprüche 1 bis 6,
bei der die Druckseite (4) eine Rauheit ≥ 20µm, insbesondere von 20µm bis 30µm aufweist.

8. Verfahren zur Herstellung einer Schaufel (1, 120, 130), insbesondere nach einem oder mehreren der Ansprüche 1 bis 7,
bei dem die Oberfläche der Druckseite (4) der Schaufel aufgeraut wird,
insbesondere bei dem nur die Oberfläche der Druckseite (4) der Schaufel aufgeraut wird.

9. Verfahren zur Herstellung einer Schaufel (1, 120, 130), insbesondere nach einem oder mehreren der Ansprüche 1 bis 7,
bei dem die Oberfläche der Saugseite (7) einer Schaufel geglättet wird,
insbesondere bei dem nur die Oberfläche der Saugseite (7) einer Schaufel geglättet wird.
